# EUROPEAN PATENT SPECIFICATION

(11) **EP 3 523 690 B1**
(45) Date of publication and mention of the grant of the patent: **20.08.2025**
(21) Application number: 17783555.0
(22) Date of filing: 05.10.2017
(51) Int. Cl.: G02B 21/00, G02B 21/32, G02B 21/36

(54) **LIGHT SHEET IMAGING WITH ACOUSTIC TRAPPING**
LICHTSCHNITTBILDGEBUNG MIT AKUSTISCHEM EINFANGEN
IMAGERIE DE FEUILLE LÉGÈRE AVEC PIÉGEAGE ACOUSTIQUE

(30) Priority: 07.10.2016 GB 201617089
(43) Date of publication of application: 14.08.2019
(73) Proprietor: University Court of The University of St Andrews, St Andrews Fife KY16 9AJ (GB)
(72) Inventor: DHOLAKIA, Kishan, St Andrews Fife KY16 9SS (GB); YANG, Zhengyi, St Andrews Fife KY16 9SS (GB)
(74) Representative: Marks & Clerk LLP
(86) International application number: PCT/GB2017/053010
(87) International publication number: WO 2018/065772

(56) References cited:
- EP-A1- 1 344 817
- DE-A1- 102014 119 255
- G. THALHAMMER ET AL: "Combined acoustic and optical trapping", BIOMEDICAL OPTICS EXPRESS, vol. 2, no. 10, 1 October 2011 (2011-10-01), United States, pages 2859, XP055292733, ISSN: 2156-7085, DOI: 10.1364/BOE.2.002859
- BRODIE G W J ET AL: "Acoustic Bessel beam with combined optical trapping", PROCEEDINGS OF SPIE, IEEE, US, vol. 8458, 10 October 2012 (2012-10-10), pages 84582H - 84582H, XP060029138, ISBN: 978-1-62841-730-2, DOI: 10.1117/12.929980
- BRODIE GRAHAM: "Hybrid optical and acoustic trapping", UNIVERSITY OF DUNDEE - DOCTOR OF PHILOSOPHY, 1 January 2014 (2014-01-01), XP055292865, Retrieved from the Internet <URL:http://discovery.dundee.ac.uk/portal/files/4180327/Brodie_PhD_2014.pdf> [retrieved on 20160802]
- ZHENGYI YANG ET AL: "Macro-optical trapping for sample confinement in light sheet microscopy", BIOMEDICAL OPTICS EXPRESS, vol. 6, no. 8, 8 July 2015 (2015-07-08), United States, pages 2778, XP055433105, ISSN: 2156-7085, DOI: 10.1364/BOE.6.002778
- H. M. HERTZ: "Standing-wave acoustic trap for nonintrusive positioning of microparticles", JOURNAL OF APPLIED PHYSICS, vol. 78, no. 8, 15 October 1995 (1995-10-15), US, pages 4845, XP055324770, ISSN: 0021-8979, DOI: 10.1063/1.359770
- SUSAN E. SKELTON SPESYVTSEVA ET AL: "Trapping in a Material World", ACS PHOTONICS, vol. 3, no. 5, 18 May 2016 (2016-05-18), pages 719 - 736, XP055433228, ISSN: 2330-4022, DOI: 10.1021/acsphotonics.6b00023

## Description

### FIELD

The present invention relates to light sheet imaging with acoustic and optical trapping and, in particular though not exclusively, to light sheet microscopy using acoustic trapping for contactless confinement of a sample to be imaged such as a particle, a colloid, a cell, a conglomerate of cells (e.g. a cell biopsy), an embryo, a larva or an organism such as a complex organism or a plurality of such samples, and optical trapping for optically trapping a part of the sample.

### BACKGROUND

It is well known that light sheet fluorescent microscopy (LSFM) can provide high-contrast images of a sample such as a particle, a colloid, a cell, a conglomerate of cells (e.g. a cell biopsy), an embryo, a larva, an organism such as a complex organism or a plurality of such samples whilst minimizing photo-damage and photo bleaching of the sample. Consequently, LSFM has been shown to be suitable for long-term monitoring of such samples. The independence of the illumination and the detection axis ensure high contrast images even with low numerical aperture detection optics, thus LSFM has been widely used for large samples, such as whole Zebrafish and intact cleared mouse brain. Currently the most common method of LSFM relies upon mounting of a sample using agarose gel for ease of translation and rotation of the sample. However, live samples need to be anesthetized for embedding in agarose, which is not always possible. For those samples that cannot be anesthetized such as micro-organisms with cilia, mechanical confinement is impossible.

Previous studies have demonstrated that optical trapping can provide contactless confinement of a sample for LSFM imaging. However, forming an optical trap requires complex equipment and extensive optics knowledge. In addition, optical trapping may not be particularly useful for samples of a size beyond 100 µm or for live samples that are capable of moving vigorously enough so as to escape from the optical trap.

Zhengyi Yang et al., "Macro-optical trapping for sample confinement in light sheet microscopy", Biomedical Optics Express, Vol. 6, No. 8, 8 July 2015, pp. 2778 - 2785 discloses an integrated light sheet microscope which solely uses optical forces to trap and hold the sample using a counter-propagating laser beam geometry.

### SUMMARY

According to an aspect of the present invention there is provided a light sheet imaging system defined according to claim 1. Optional features of the light sheet imaging system are defined according to dependent claims 2 to 11.

According to an aspect of the present invention there is provided a light sheet imaging method defined according to claim 12. Optional features of the light sheet imaging method are defined according to dependent claims 13 and 14.

It should be understood that any one or more features of any one of the following aspects or embodiments of the present disclosure may apply alone or in any combination in relation to any other one of the following aspects or embodiments of the present disclosure.

According to at least one aspect or at least one embodiment of the present disclosure there is provided a light sheet imaging system, comprising an acoustic trapping arrangement for forming an acoustic trap using one or more acoustic beams and an optical system for light sheet imaging a sample positioned in the acoustic trap.

The one or more acoustic beams may have an ultrasonic frequency in the range 20 kHz to 10 GHz.

Such a system may be used to perform light sheet imaging on a sample confined in a contactless manner in an acoustic trap formed using one or more acoustic beams. Compared with known optical trapping methods for light sheet imaging, acoustic trapping may be used to trap samples for light sheet imaging, where the samples have at least one dimension in the range of 1 µm - 10 mm.

The sample may comprise at least one of a particle, a colloid, a cell, a conglomerate of cells (e.g. a cell biopsy), an embryo, a larva and an organism such as a complex organism. The sample may be alive and/or mobile. It has been discovered that acoustic trapping may provide a much greater trapping force compared with optical trapping. Consequently, acoustic trapping may provide more stable confinement of a sample for light sheet imaging than optical trapping. This may be particularly important when the sample is alive and capable of vigorous movement in the absence of any confinement. Such a system may allow live samples to be monitored using light sheet imaging over timescales of one or more hours or days. Such a system may allow live samples to be monitored using light sheet imaging over such timescales during and/or after the delivery of drugs or therapeutic agents. Such a system avoids any requirement to anesthetize a live sample for embedding in agarose gel. Such a system may allow live samples such as micro-organisms with cilia to be monitored using light sheet imaging. In addition, it has been found that a light sheet imaging system comprising an acoustic trap may be simpler and may be more compact than a light sheet imaging system comprising an optical trap. Moreover, since the acoustic trap may be constructed and/or aligned independently of the optical system, such a light sheet imaging system can be used to image different samples with little or no requirement to re-align the optical system between imaging of the different samples.

The acoustic trapping arrangement may comprise two opposed acoustic transducers for generating two counter-propagating acoustic beams so as to form a standing acoustic wave which defines the acoustic trap.

The acoustic trapping arrangement may comprise an acoustic transducer for generating an acoustic beam and a surface for reflecting the acoustic beam so as to form a standing acoustic wave which defines the acoustic trap.

The acoustic trapping arrangement may be configured to generate a plurality of acoustic traps using the one or more acoustic beams and optical system may be configured to light sheet image at least one sample in each acoustic trap. Such a system may allow high throughput light sheet imaging of a plurality of live samples over timescales of one or more hours or days during and/or after the delivery of drugs or therapeutic agents.

The optical system and the acoustic trapping arrangement may be moveable relative to one another. This may permit the acoustic field and any sample trapped by the acoustic field to be moved into a region illuminated by a light sheet generated by the optical system. Additionally or alternatively, this may permit the acoustic field and any sample trapped by the acoustic field to be moved into a field of view imaged by the optical system. The light sheet imaging system may be configured for movement of the optical system and the acoustic trapping arrangement relative to one another by a predetermined distance from a first relative position for light sheet imaging a first sample trapped in a first acoustic trap to a second relative position for light sheet imaging a second sample trapped in a second acoustic trap. The predetermined distance may be an integer multiple of half of the acoustic wavelength. Since adjacent acoustic traps are separated by half of the acoustic wavelength, such a light sheet imaging system may facilitate rapid re-alignment of the optical system and the acoustic trapping arrangement between light sheet imaging of the first and second samples for high throughput imaging.

The optical system may comprise a laser source. The optical system may comprise a CCD or a CMOS image sensor.

The optical system comprises illumination optics for generating a light sheet for illuminating a region through the sample and detection optics for imaging light emitted from the illuminated region of the sample. The illuminated region may be generally planar. The illumination optics may comprise an illumination objective. The detection optics may comprise a detection objective.

The illumination optics and the acoustic trapping arrangement may be moveable relative to one another. The detection optics and the acoustic trapping arrangement may be moveable relative to one another.

The illumination optics and the detection optics may be movable relative to one another. This may permit the illuminated region of the sample to be moved into a field of view imaged by the optical system.

The illumination optics are configured so that the light sheet propagates along an illumination axis. Similarly, the detection optics are configured to image emitted light propagating along a detection axis. The detection axis may be orthogonal to the illumination axis. The orthogonal arrangement of the illumination axis and the detection axis may provide high contrast images even with low-numerical-aperture detection optics.

The illumination axis and the detection axis together define an optical system plane. The one or more acoustic beams propagate along an acoustic axis which defines a non-zero angle relative to the optical system plane. Such an arrangement may allow the illumination optics and the detection optics to be separated from the one or more acoustic beams so as to avoid any interaction between the one or more acoustic beams and at least one of the illumination optics and the detection optics. The acoustic axis may be orthogonal to the optical system plane.

The light sheet imaging system comprises a sample chamber for holding a fluid in which the sample is contained or suspended. The fluid may comprise one or more liquids. The fluid may comprise water. The fluid may comprise one or more nutrients for sustaining a live sample. The fluid may comprise one or more gases. The fluid may comprise air.

The fluid may comprise one or more gases for sustaining a live sample. The fluid may comprise oxygen. The fluid may comprise an oxygenated liquid such as oxygenated water. The fluid may be temperature controlled. The fluid may comprise one or more drugs or therapeutic agents.

The light sheet imaging system may comprise a fluid pump for circulating the fluid through the sample chamber. The light sheet imaging system may comprise an input fluid conduit connecting the fluid pump to the fluid inlet and an output fluid conduit connecting the fluid outlet to the fluid pump. The fluid pump may be used to circulate fluid through the sample chamber at a controlled rate. The fluid pump may be used to circulate fluid to provide nutrients for sustaining a live sample, to provide a gas such as oxygen for sustaining a live sample, and/or to remove waste products generated by a live sample. The fluid pump may be used to circulate fluid to provide and/or remove one or more drugs or therapeutic agents.

The fluid pump may be used to circulate fluid to provide the sample to the sample chamber and/or remove the sample from the sample chamber.

The fluid inlet may be positioned in or adjacent to a path of the one or more acoustic beams. This may allow a sample to be rapidly positioned in the acoustic trap by pumping the fluid in which the sample is immersed through the fluid inlet. This may facilitate higher throughput light sheet imaging of a plurality of samples.

The fluid outlet may be positioned in or adjacent to a path of the one or more acoustic beams. This may allow a sample to be rapidly removed from the acoustic trap by pumping the fluid in which the sample is immersed through the fluid outlet. The one or more acoustic beams may be absent, for example the one or more acoustic transducers may be temporarily disabled or switched off, to facilitate the removal of the sample from the acoustic trap in this way. This may facilitate higher throughput light sheet imaging of a plurality of samples.

At least one of the input fluid conduit and the output fluid conduit may comprise or may be at least partially defined by a microfluidic channel.

The sample chamber may comprise or may be a microfluidic chamber.

The acoustic axis may extend through the sample chamber.

The sample chamber comprises an opening.

The acoustic trapping arrangement may be fixed relative to the sample chamber.

The acoustic trapping arrangement and the sample chamber may be moveable relative to one another. Movement of the acoustic trapping arrangement relative to the sample chamber may permit the acoustic field to be reconfigured, for example, moved relative to the sample chamber. This may permit movement of the sample relative to the sample chamber. Movement of the acoustic trapping arrangement relative to the sample chamber may permit the acoustic field to be changed in shape and/or size.

The optical system may be fixed relative to the sample chamber. The illumination optics may be fixed relative to the sample chamber. The detection optics may be fixed relative to the sample chamber.

The optical system and the sample chamber may be moveable relative to one another. The illumination optics and the sample chamber may be moveable relative to one another. The detection optics and the sample chamber may be moveable relative to one another. Movement of the illumination optics and/or the detection optics relative to the sample chamber may permit the illumination plane and/or the detection plane to be moved relative to the sample chamber.

The illumination optics and the detection optics are located on the opposite side of the sample chamber to the opening. Such an arrangement may be useful when the acoustic trapping arrangement is moveable relative to the sample chamber, for example to align the acoustic field and/or the sample with the illumination and detection planes. Such an arrangement may be particularly advantageous because, once the illumination optics and the detection optics have been aligned with and/or fixed relative to the sample chamber, the sample may be trapped and/or replaced with a further sample without any requirement to re-align the illumination optics and the detection optics relative to the sample chamber.

The sample chamber comprises or is defined at least in part by a wall.

The light sheet imaging system may comprise a container for a further fluid. The further fluid may be the same or different to the fluid. The container may at least partially surround the wall of the sample chamber. This may allow the further fluid to at least partially surround the wall of the sample chamber.

The acoustic trapping arrangement may be exposed to the further fluid. For example, the acoustic trapping arrangement may comprise one or more acoustic transducers which are exposed to the further fluid. The further fluid may transmit the one or more acoustic beams generated from the one or more acoustic transducers to the wall of the sample chamber.

The wall may be configured to transmit the one or more acoustic beams from the further fluid to the fluid. The wall may be flexible and/or deformable. The wall may comprise a membrane. The wall may have a thickness of between 1 µm and 1 mm, a thickness of between 10 µm and 100 µm, or a thickness substantially equal to 50 µm.

The wall of the sample chamber may be formed from a material which has an acoustic impedance which is matched to an acoustic impedance of the fluid and/or to an acoustic impedance of the further fluid. This may help to suppress reflections of the one or more acoustic beams from the wall.

The wall is transparent to the light sheet and transparent to the light emitted from the sample. The wall of the sample chamber may be formed from a material which has a refractive index which is matched to a refractive index of the fluid and/or to a refractive index of the further fluid. This may help to suppress reflections from the wall of the light sheet and/or of the light emitted from the sample.

The wall of the sample chamber may comprise or be formed from a polyester material, for example stretched polyethylene terephthalate (PET). The wall of the sample chamber may comprise or be formed from a biaxially-oriented polyethylene terephthalate (BoPET) material. The wall of the sample chamber may comprise or be formed from Mylar. The wall of the sample chamber may comprise or be formed from a fluorinated ethylene propylene (FEP) material.

The acoustic trapping arrangement may be fixed relative to the fluid container.

The acoustic trapping arrangement may be moveable relative to the fluid container.

The illumination optics may be fixed relative to the fluid container. The detection optics may be fixed relative to the fluid container.

The illumination optics may be moveable relative to the fluid container. The detection optics may be moveable relative to the fluid container.

The illumination optics may be configured to direct the light sheet so as to illuminate different regions through the sample at different times. The detection optics may be configured to image light emitted from the different illuminated regions at the different times.

The illumination optics may comprise a scanning mirror for directing the light sheet so as to illuminate the different regions through the sample at the different times. The detection optics may comprise a tuneable lens for imaging the light emitted from the different illuminated regions at the different times.

Conventional three-dimensional (3D) image stack construction may involve scanning a sample along the detection axis. However the relative bulk of the illumination and detection optics such as the illumination and detection objectives may interfere with the one or more acoustic beams during this process. Use of a scanning mirror to scan the light sheet so as to illuminate different regions and a tuneable lens such as an electrical tuneable lens to image the different illuminated regions instead of moving the sample not only allows the sample to be kept stationary whilst image stacks are taken, but also allows fast scanning of the sample.

The optical system may comprise an image sensor for acquiring an image of the light emitted from each of the different illuminated regions. The image sensor may have an exposure time which is greater than a time taken to illuminate the different regions through the sample and to image light emitted from the different illuminated regions. Such an optical system effectively integrates images of the fluorescence emitted from the different illuminated regions through the sample. This may dramatically reduce the amount of data generated during long-term monitoring of a sample. This may be particularly important when monitoring a sample using light sheet imaging over an extended period of time of one or more hours or days, for example when investigating the effect of a drug or a therapeutic agent on a live sample.

The optical system may be configured to generate a light sheet of any kind. For example, the illumination optics may be configured to generate a light sheet comprising an Airy beam, a Bessel beam or the like.

The light sheet imaging system comprises an optical trapping arrangement for forming an optical trap for optically trapping a part of the sample such as an internal structure of the sample using one or more optical beams. Such a light sheet imaging system may permit the sample to be held in the acoustic trap and an internal structure of the sample to be held in the optical trap during light sheet imaging.

The optical system may be configured to form an optical trap beam. For example, the illumination optics may comprise a mirror for reflecting the optical trap beam so as to form a dual beam optical trap for optically trapping a part of a sample such as an internal structure of the sample. The sample may be positioned between the mirror and the illumination objective. Such a light sheet imaging system may permit the sample to be held in the acoustic trap and an internal structure of the sample to be held in the dual beam optical trap during light sheet imaging.

The optical system may be configured to form a single beam optical trap. Such a light sheet imaging system may permit the sample to be held in the acoustic trap whilst a part of the sample such as an internal structure of the sample is manipulated using single beam optical tweezers using the optical trap beam.

The optical system may be configured to form an optical beam for optical nanosurgery and/or poration of the sample.

According to at least one aspect or at least one embodiment of the present disclosure there is provided a light sheet imaging method, comprising forming an acoustic trap using one or more acoustic beams and light sheet imaging a sample positioned in the acoustic trap.

The one or more acoustic beams may have an ultrasonic frequency in the range 20 kHz to 10 GHz.

The method may comprise directing a light sheet so as to illuminate different regions through the sample at different times and imaging light emitted from the different illuminated regions at the different times.

The method may comprise integrating images of the light emitted from each of the different illuminated regions over a time period which is greater than a time taken to illuminate the different regions through the sample and to image light emitted from the different illuminated regions.

The method may comprise acoustically trapping and acquiring light sheet images of a sample over a time period of up to 24 hours.

The method may comprise acoustically trapping and acquiring light sheet images of a sample over a time period of one or more days.

Such methods may be particularly important when investigating the effect of a drug in live specimens.

The sample may comprise at least one of a particle, a colloid, a cell, a conglomerate of cells (e.g. a cell biopsy), an embryo, a larva and an organism such as a complex organism.

The sample may be alive and/or mobile.

The sample may have at least one dimension in the range of 1 µm - 10 mm.

The method may comprise light sheet imaging a plurality of samples positioned in the acoustic trap.

The method may comprise using the one or more acoustic beams to generate a plurality of acoustic traps and light sheet imaging at least one sample positioned in each acoustic trap. The method may comprise light sheet imaging at least one sample positioned in each acoustic trap sequentially or simultaneously.

The method may comprise using the one or more acoustic beams to generate a standing acoustic wave defining a plurality of acoustic nodes, wherein each acoustic node defines a corresponding acoustic trap.

### BRIEF DESCRIPTION OF THE DRAWINGS

Light sheet imaging systems and methods will now be described by way of nonlimiting example only with reference to the following drawings of which:
Figure 1 is a schematic of a light sheet imaging system including an acoustic trapping arrangement and light sheet imaging optics;
Figure 2 is a cross-section on AA of a reference example sample chamber and a reference example acoustic trapping arrangement of the light sheet imaging system of Figure 1;
Figure 3A is an image produced using the light sheet imaging system of Figure 1 of an Amphioxus embryo with the chorion;
Figure 3B is an image produced using the light sheet imaging system of Figure 1 of a Ciona embryo showing the nuclei;
Figure 3C is an image produced using the light sheet imaging system of Figure 1 of a Ciona embryo showing cell membrane;
Figure 3D is an image produced using the light sheet imaging system of Figure 1 of a Ciona larva head with part of the tail;
Figure 4A is a schematic of an alternative sample chamber and an alternative acoustic trapping arrangement for use with the light sheet imaging system of Figure 1 according to the present invention; and
Figure 4B is a detailed schematic of the alternative sample chamber and the alternative acoustic trapping arrangement of Figure 4A.

### DETAILED DESCRIPTION OF THE DRAWINGS

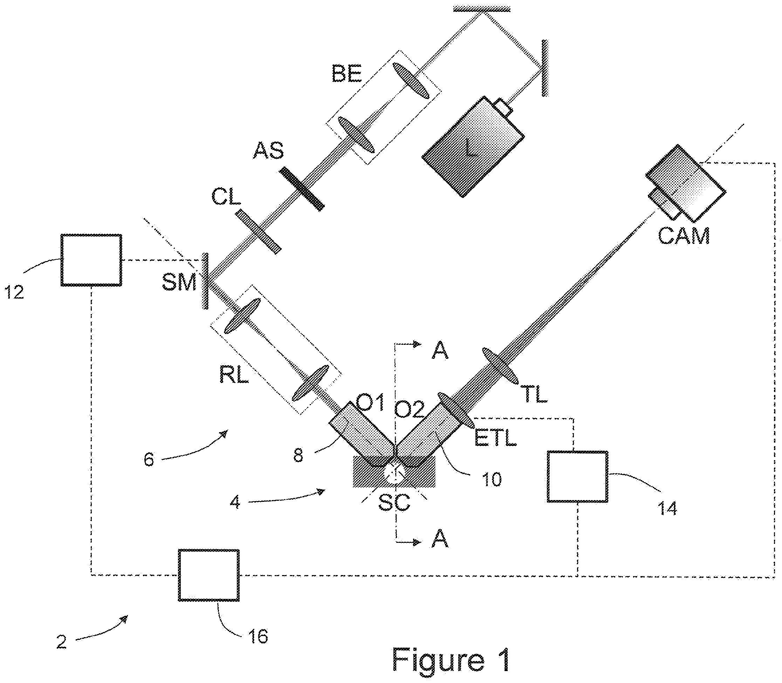

Referring initially to Figure 1 there is shown a light sheet imaging system generally designated 2 including a reference example acoustic trapping arrangement generally designated 4 for forming an acoustic trap within a reference example sample chamber SC using one or more acoustic beams and an optical system generally designated 6 for light sheet imaging a sample (not shown in Figure 1) positioned in the acoustic trap.

The optical system 6 includes a laser L configured to operate CW at a wavelength of 532 nm or 488 nm. The optical system 6 includes illumination optics in the form of a beam expander BE for expanding a beam emitted by the laser L, an adjustable slit AS and a cylindrical lens CL for forming a light sheet, a steering mirror SM, a pair of relay lenses RL and a water-dipping illumination objective O1. The optical system 6 further includes detection optics in the form of a water-dipping detection objective O2 for collecting fluorescence emitted by the sample, an electrical tuneable lens ETL (Optotune EL-10-30-C) a tube lens TL. The optical system 6 also includes an image sensor in the form of a sCMOS camera CAM. As shown in Figure 1, the illumination objective O1 is arranged along an illumination axis 8 and the detection objective O2 is arranged along a detection axis 10 which is orthogonal to the illumination axis 8.

The light sheet imaging system 2 further includes an electrical driver 12 such as a function generator for the steering mirror SM, an electrical driver 14 for the ETL and a controller 16 for controlling the electrical drivers 12, 14 and the sCMOS camera CAM.

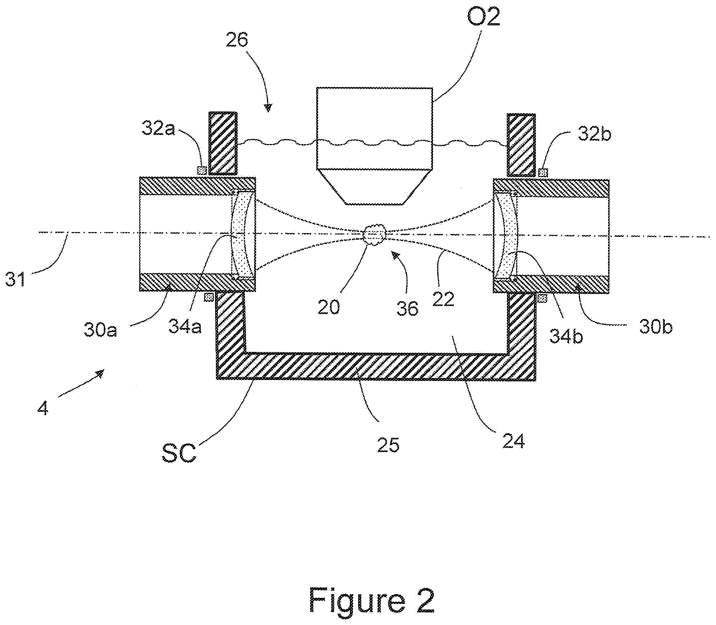

Figure 2 shows a cross-section on AA of the reference example sample chamber SC and the reference example acoustic trapping arrangement 4 of Figure 1. A sample 20 is shown suspended by a standing-wave acoustic field generally designated 22 formed within a fluid in the form of a liquid 24 such as water contained within the sample chamber SC. The sample chamber SC includes a wall 25 formed from 10 mm - thick Perspex. The sample chamber SC has internal dimensions of 32 x 30 x 30 mm. The sample chamber SC defines an opening 26. The acoustic trapping arrangement 4 comprises two opposed acoustic transducers 30a and 30b located on an acoustic axis 31, which acoustic axis 31 is orthogonal to both the illumination axis 8 and the detection axis 10. Each acoustic transducer 30a, 30b is fixed relative to the sample chamber SC and extends through a respective hole in the wall 25 of the sample chamber SC. O-ring seals 32a and 32b are fitted around the transducers 30a and 30b respectively to prevent the liquid 24 from escaping from the sample chamber SC. The sample chamber SC is moveable together with the transducers 30a, 30b relative to the objectives O1, O2 to allow the sample 20 to be positioned in a field of view of the detection objective O2.

Each acoustic transducer 30a and 30b includes an active element 34a and 34b respectively. Each active element 34a, 34b is formed from a piezo-material PZ26 from Meggitt A/S. PZ26 has a high Q value and is able to provide relatively high levels of acoustic power and force. The outer diameter of each active element 34a, 34b is 20 mm with a focusing radius of 16 mm. This results in an f-number of 0.8 and provides a good compromise between the physical size of each transducer 30a, 30b and the size of a focal region 36 of the acoustic field 22. Specifically, the 16 mm focusing radius allows the objectives O1, O2 to extend through the opening 26 and to dip into the liquid 24 without interacting with the acoustic field 22. The thickness of each of the active elements 34a, 34b is chosen so that the resulting resonant frequency of the active elements 34a, 34b is 1.5 MHz, providing an acoustic wavelength in water of approximately 1 mm. Each of the acoustic transducers 30a, 30b is air-backed for maximum acoustic output power.

In use, the acoustic transducers 30a, 30b generate counter propagating acoustic beams which form the standing-wave acoustic field 22 with nodes spaced half a wavelength apart. The sample 20 is trapped at a node in the focal region 36 of the acoustic field 22. Standard acoustic characterisation methods such as impedance measurements and Schlieren imaging methods are used to align the acoustic transducers 30a, 30b opposite one another along the acoustic axis 31 with the focal region 36 of the acoustic field 22 positioned near the centre of the sample chamber SC. As shown in Figure 2, the acoustic field 22 is separated from the objectives O1, O2 to eliminate the effect of the objectives O1, O2 on the acoustic field 22. Experiments with beads of different sizes and materials were performed to assess the magnitude of the acoustic trapping force provided by the acoustic field 22. In particular, 100 µm glass beads, 500 µm polystyrene beads and 500 µm glass beads were trapped by the acoustic field 22. The 500 µm glass beads were trapped acoustically demonstrating that the acoustic field 22 can provide a lateral trapping force of at least 5µN, which is orders of magnitude greater than the trapping force obtainable using optical trapping.

Light from the laser L is expanded by the beam expander **BE,** and the adjustable slit AS and the cylindrical lens CL form a light sheet. The light sheet is delivered by the pair of relay lenses RL to a back aperture of the illumination objective O1. The light sheet is transmitted through the sample 20 so as to illuminate a generally planar region of the sample 20. The controller 16 controls the electrical drivers 12, 14 so that the detection optics, O2, ETL and TL, image the fluorescence emitted from the generally planar illuminated region of the sample 20 onto the sCMOS camera CAM. Specifically, the SC is kept stationary whilst the controller 16 controls the electrical drivers 12, 14 so as to scan the plane of illumination and the plane of detection (i.e. the imaged plane) in synchronisation along the detection axis 10 for imaging the sample 20 across a plurality of different detection planes i.e. for volumetric imaging of the sample 20. This not only allows the sample 20 to be kept stationary whilst image stacks are taken, but also allows fast scanning of the sample 20. This may be particularly important when monitoring one or more live and/or mobile samples.

The controller 16 also controls an exposure time of the sCMOS camera CAM according to a desired axial resolution along the detection axis 10. For example, if a higher axial resolution is desired along the detection axis 10, the controller 16 may select a shorter exposure time so that the sCMOS camera CAM acquires an individual image of each detection plane through the sample 20. If, however, a lower axial resolution is desired along the detection axis 10, the controller 16 may select a longer exposure time so that the sCMOS camera CAM effectively integrates the images from a plurality of different detection planes through the sample 20 to form an integrated image. By acquiring an integrated image in this way instead of individual images of the different detection planes, the amount of data generated during long-term monitoring of the sample 20 may be dramatically reduced. This may be particularly important when monitoring one or more live samples over periods of several hours or more, for example when investigating the effect of a drug on one or more live samples.

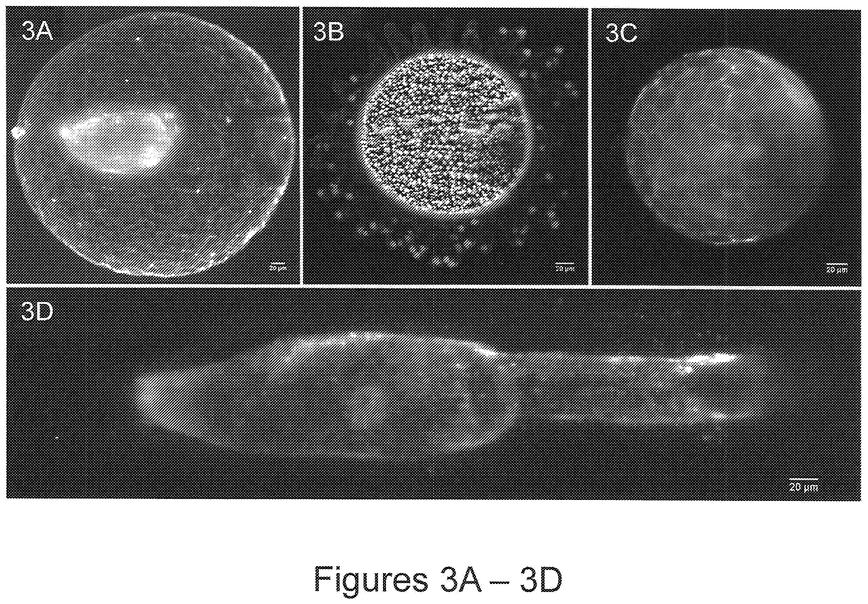

The light sheet imaging system 2 may be used to trap and image embryos and larvae such as Amphioxus and Ciona embryos and larvae over extended time periods of 12 hours or more. With the help of the acoustic trap, the original morphology of the samples, such as the chorion can be kept intact. For example, Figure 3A shows an image acquired using the light sheet imaging system 2 in which the chorion of an Amphioxus embryo is intact. The embryos were incubated in 10µg/ml concentration of Alexa Fluor 555 conjugates (WGA, Invitrogen) at 20 °C for 1 hour, followed by two washes with sea water before being transferred to the sample chamber SC for imaging. All sea water used was filtered with a 0.22 µm filter. The light sheet imaging system 2 was used to observe the movement of the chorion with time-sequence imaging. Normally the embryo moves in the chorion in a circular motion, with the help of the cilia on the embryo. However, the use of acoustic trapping results in the acoustic force confining the embryos at a fixed orientation whilst the cilia movements cause the chorion to rotate.

Figure 3B shows an image of a Ciona embryo acquired using the light sheet imaging system 2. Ciona adults were collected from the sea, then maintained in a circulating seawater aquarium system at ambient seawater temperature. Gametes and sperms were harvested from multiple Ciona adults and contained individually. Gametes were mixed with sperm from different Ciona adults. The eggs were poured into a 40 µm cell strainer to remove excess sperm, then left to develop in filtered seawater at approximately 20 °C. Before imaging, the embryos were incubated in 5 µM SYTO 81 solution for staining for 30 minutes, followed with two washes to remove residual dye. The embryos were then transferred to the sample chamber SC for imaging. In Figure 3B, sub-cellular structures such as the nuclei located at the tip of outer follicular cells (OFCs) are visible. A large vacuole structure is also visible in the follicular extension. The monolayer test cells (TCs) which form the epithelium layer are also clearly visible. Time sequence imaging may be used to monitor the Ciona over a period of several hours. For example, during time sequence imaging, it was observed that the TCs disappeared at around 4 hours age. This may be due to the apoptotic event of the TCs. Figure 3C shows the outline of inner follicular cells (IFCs) which were stained with a membrane staining agent. Figure 3D shows an image of a Ciona larva acquired using the light sheet imaging system 2. Although the body of the Ciona larva was twitching under the action of developed muscle cells, the Ciona larva failed to escape from the acoustic trap. Imaging of a larva such as the Ciona larva requires higher imaging speeds due to the frequent movement of the larva. Use of the steering mirror SM and the electrically tuneable lens ETL allowed the capture of a 3D stack of images in 0.1 seconds or less.

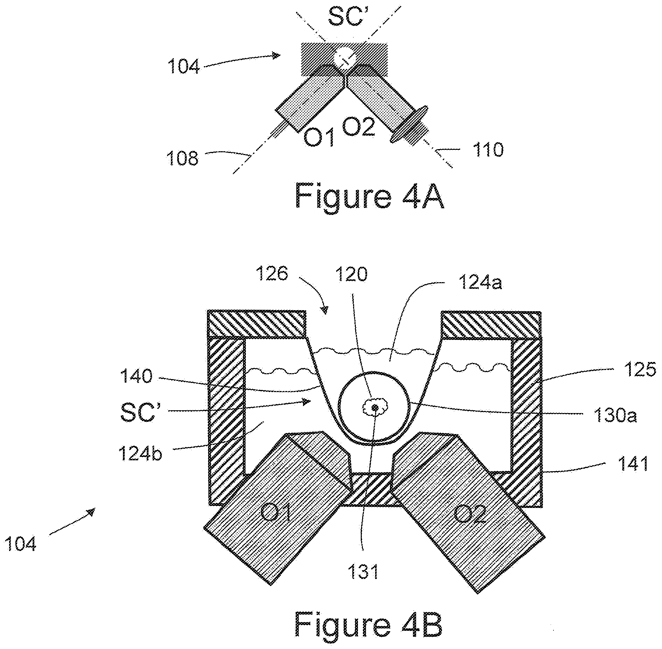

Figures 4A and 4B show an alternative sample chamber SC' and an alternative acoustic trapping arrangement 104 for use with the light sheet imaging system of Figure 1 according to the present invention, wherein the illumination and detection objectives O1, O2 are located on a side of the sample chamber SC' opposite to an opening 126. The alternative sample chamber SC' and the alternative acoustic trapping arrangement 104 of Figures 4A and 4B have features which correspond to features of the sample chamber SC and the acoustic trapping arrangement 4 shown in Figure 2 with like features in Figures 4A and 4B having the same reference numerals as corresponding features in Figure 2 generally incremented by '100'. Unlike the sample chamber SC shown in Figure 2, the alternative sample chamber SC' is defined at least in part by a wall in the form of a 50 µm thick transparent fluorinated ethylene propylene (FEP) membrane 140 having an opening 126. The illumination and detection objectives O1, O2 are moveable relative to the transparent membrane 140. The container 141 includes a wall 125 formed from 10 mm thick Perspex. The alternative acoustic trapping arrangement 104 comprises two opposed acoustic transducers 130a and 130b located on an acoustic axis 131, which acoustic axis 131 is orthogonal to both the illumination axis 108 and the detection axis 110. In the interests of clarity, only the acoustic transducer 130a is shown in Figure 4B. Each acoustic transducer 130a, 130b is moveable relative to the transparent membrane 140 and to the wall 125 of the container 141.

In use, the sample chamber SC' contains a fluid in the form of a liquid 124a such as water. A sample 120 is suspended within the liquid 124a. The transparent membrane 140 is at least partially surrounded by a further fluid in the form of a further liquid 124b such as water contained within a container 141. The transparent membrane 140 has an acoustic impedance which is matched to the acoustic impedance of the liquids 124a and 124b so as to at least partially suppress any reflections of the acoustic beams from the membrane 140. The transparent membrane 140 has a refractive index which is matched to the refractive index of the liquids 124a and 124b so as to at least partially suppress any optical reflections from the membrane 140.

In use, the acoustic transducers 130a, 130b generate counter propagating acoustic beams which form a standing-wave acoustic field which extends from the acoustic transducers 130a, 130b, through the liquid 124b, through the transparent membrane 140 and into the liquid 124a contained within the transparent membrane 140 so as to trap the sample 120 in a focal region of the acoustic field within the liquid 124a.

The alternative sample chamber SC' and alternative acoustic trapping arrangement 104 may allow the optical system 6 to be aligned before the liquid 124a and the sample 120 is received within the alternative sample chamber SC'. The alternative sample chamber SC' and alternative acoustic trapping arrangement 104 may also allow the liquid 124a and the sample 120 to be easily removed and/or replaced without any requirement for re-alignment of the optical system 6.

One of ordinary skill in the art will understand that various modifications may be made to the light sheet imaging system 2 described above with reference to Figures 1 to 4B without departing from the scope of the invention as defined with reference to the claims. For example, one of the acoustic transducers 30a, 30b may be replaced by a surface for reflecting the acoustic beam generated by the other of the acoustic transducers 30a, 30b so as to form a standing acoustic wave which defines the acoustic trap.

The sample chamber may define a fluid inlet and a fluid outlet. The light sheet imaging system may comprise a fluid pump for circulating the fluid through the sample chamber. The light sheet imaging system may comprise an input fluid conduit connecting the fluid pump to the fluid inlet and an output fluid conduit connecting the fluid outlet to the fluid pump. The fluid pump may be used to circulate fluid through the sample chamber at a controlled rate. The fluid pump may be used to circulate fluid to provide nutrients for sustaining a live sample, to provide a gas such as oxygen for sustaining a live sample, and/or to remove waste products generated by a live sample. The fluid pump may be used to circulate fluid to provide and/or remove one or more drugs or therapeutic agents.

The fluid pump may be used to circulate fluid to provide the sample to the sample chamber and/or remove the sample from the sample chamber.

The fluid inlet may be positioned in or adjacent to a path of the one or more acoustic beams. This may allow a sample to be rapidly positioned in the acoustic trap by pumping the fluid in which the sample is immersed through the fluid inlet. This may facilitate higher throughput light sheet imaging of a plurality of samples.

The fluid outlet may be positioned in or adjacent to a path of the one or more acoustic beams. This may allow a sample to be rapidly removed from the acoustic trap by pumping the fluid in which the sample is immersed through the fluid outlet. The one or more acoustic beams may be absent, for example the one or more acoustic transducers may be temporarily disabled or switched off, to facilitate the removal of the sample from the acoustic trap in this way. This may facilitate higher throughput light sheet imaging of a plurality of samples.

At least one of the input fluid conduit and the output fluid conduit may comprise or may be at least partially defined by a microfluidic channel.

The sample chamber may comprise or may be a microfluidic chamber.

The light sheet imaging system 2 may be configured to generate a light sheet of any kind. For example, the light sheet imaging system 2 may be configured to generate an Airy beam, a Bessel beam or the like. One of ordinary skill in the art will appreciate that although an Airy beam or Bessel beam light sheet may illuminate a generally planar region of the sample in the detection plane, the illuminated region may not be strictly planar but may have a thickness which extends in a direction along the detection axis 110.

The light sheet imaging system 2 may comprise an optical trapping arrangement for forming an optical trap for optically trapping a part of the sample such as an internal structure of the sample using one or more optical beams. Such a light sheet imaging system may permit the sample to be held in the acoustic trap and an internal structure of the sample to be held in the optical trap during light sheet imaging.

The light sheet imaging system 2 may include an optical beam combiner, optical switch or the like for optically coupling light from a further laser to the sample 20 via the illumination objective O1 to form an optical trap beam. The light sheet imaging system 2 may include a mirror for reflecting the optical trap beam so as to form a dual beam optical trap for optically trapping a part of a sample such as an internal structure of the sample. The sample 20 may be positioned between the mirror and the illumination objective O1. Such a light sheet imaging system may permit the sample to be held in the acoustic trap and an internal structure of the sample to be held in the dual beam optical trap during light sheet imaging.

The light sheet imaging system 2 may include an optical beam combiner, optical switch or the like for optically coupling light from a further laser to the sample 20 via the illumination objective O1 to form an optical trap beam for a single beam optical trap. Such a light sheet imaging system may permit the sample to be held in the acoustic trap whilst a part of the sample such as an internal structure of the sample is manipulated using single beam optical tweezers using the optical trap beam.

The light sheet imaging system 2 may be configured to form an optical beam for optical nanosurgery and/or poration of the sample. For example, the light sheet imaging system 2 may include an optical beam combiner, optical switch or the like for optically coupling light from a further laser to the sample 20 via the illumination objective O1 to form an optical beam for optical nanosurgery and/or poration of the sample 20.

At least one of the foregoing acoustic trapping arrangements 4, 104 may be used in combination with a light sheet imaging system of any kind. For example, at least one of the foregoing acoustic trapping arrangements 4, 104 may be used in combination with a known swept confocally-aligned planar excitation (SCAPE) microscopy arrangement such as that disclosed in 'Swept confocally-aligned planar excitation (SCAPE) microscopy for high-speed volumetric imaging of behaving organisms', Bouchard, Matthew B. et al., Nature Photonics, Vol. 9, February 2015. At least one of the foregoing acoustic trapping arrangements 4, 104 may be used in combination with a light sheet imaging method which generates a light sheet using a multimode optical fibre as disclosed in 'Multimode fibre: light-sheet microscopy at the tip of the needle', Plöschner, M. et al., Sci. Rep. 5, 18050; doi: 10.1038/srep18050 (2015).

The light sheet imaging system 2 may be used to trap and image samples of any kind including at least one of a particle, a cell, a conglomerate of cells (e.g. a cell biopsy), a colloid, an embryo, a larva and an organism such as a complex organism. The light sheet imaging system 2 may be used to trap and image samples having at least one dimension of 1 µm - 10 mm.

The acoustic trapping arrangement 4 and the optical system 6 may be configured to image at least two samples simultaneously. For example, with reference to the light sheet imaging system 2 of Figures 1 and 2, the optical system 6 may be configured to generate a light sheet which is several mm wide and to direct the light sheet through the focal region 36 of the acoustic field 22 so as to illuminate an area of the focal region 36 of the acoustic field 22 which extends across multiple nodes of the acoustic field 22. The field of view of the detection objective O2 may be selected so as to be greater than a spacing between adjacent nodes and the sample chamber SC may be moved relative to the objectives O1, O2 so that a plurality of the illuminated nodes are located in the field of view of the detection objective O2. Such an arrangement may allow simultaneous light sheet imaging of different samples located at the different illuminated nodes in the field of view of the detection objective O2. This may allow a higher throughput of samples to be imaged using the light sheet imaging system 2.

## Claims

1. A light sheet imaging system (2), comprising:
an acoustic trapping arrangement (104) for forming an acoustic trap for acoustically trapping a sample (120) using one or more acoustic beams;
an optical trapping arrangement for forming an optical trap for optically trapping a part of the sample (120) using one or more optical beams;
an optical system (6) for light sheet imaging the sample (120); and
a sample chamber (SC') for holding a fluid (124a) in which the sample (120) is contained or suspended,
wherein the optical system (6) comprises illumination optics (BE, AS, CL, SM, RL, O1) for generating a light sheet for illuminating a region through the sample (120) and detection optics (O2, ETL, TL) for imaging light emitted from the illuminated region of the sample (120),
wherein the illumination optics (BE, AS, CL, SM, RL, O1) are configured so that the light sheet propagates along an illumination axis and the detection optics (O2, ETL, TL) are configured to image emitted light propagating along a detection axis,
wherein the illumination axis and the detection axis together define an optical system plane,
wherein the one or more acoustic beams propagate along an acoustic axis which defines a non-zero angle relative to the optical system plane,
wherein the acoustic axis extends through the sample chamber (SC'),
wherein the sample chamber (SC') comprises an opening (126),
wherein the illumination optics (BE, AS, CL, SM, RL, O1) and the detection optics (O2, ETL, TL) are located on the opposite side of the sample chamber (SC') to the opening (126),
wherein the sample chamber (SC') comprises, or is at least partially defined by, a wall (140),
wherein the wall (140) is transparent to the light sheet used to illuminate the sample (120) and to the light emitted from the sample (120), and
wherein the wall (140) is configured to transmit the one or more acoustic beams.

2. A light sheet imaging system (2) according to claim 1, wherein the acoustic trapping arrangement (104) comprises two opposed acoustic transducers (30a, 30b) for generating two counter-propagating acoustic beams so as to form a standing acoustic wave (22) which defines the acoustic trap.

3. A light sheet imaging system (2) according to claim 1, wherein the acoustic trapping arrangement (104) comprises an acoustic transducer for generating an acoustic beam and a surface for reflecting the acoustic beam so as to form a standing acoustic wave which defines the acoustic trap.

4. A light sheet imaging system (2) according to any preceding claim, wherein the detection axis is orthogonal to the illumination axis and, optionally, wherein the acoustic axis is orthogonal to the optical system plane.

5. A light sheet imaging system (2) according to claim 4, wherein the sample chamber (SC') comprises or is a microfluidic chamber.

6. A light sheet imaging system (2) according to claim 5, wherein the wall (140) is flexible and/or deformable and, optionally, wherein the wall (140) comprises a membrane comprising at least one of polyester, polyethylene terephthalate (PET), biaxially-oriented polyethylene terephthalate (BoPET), Mylar and fluorinated ethylene propylene (FEP).

7. A light sheet imaging system (2) according to any preceding claim, wherein the sample chamber (SC') defines a fluid inlet and a fluid outlet and, optionally, wherein at least one of the fluid inlet and the fluid outlet is positioned in or adjacent to a path of the one or more acoustic beams and, optionally, comprising a fluid pump, an input fluid conduit connecting the fluid pump to the fluid inlet and an output fluid conduit connecting the fluid outlet to the fluid pump and, optionally, wherein at least one of the input fluid conduit and the output fluid conduit comprises or is at least partially defined by a microfluidic channel.

8. A light sheet imaging system (2) according to any preceding claim, wherein the sample (120) comprises at least one of a particle, a cell, a conglomerate of cells, a cell biopsy, a colloid, an embryo, a larva, an organism and a complex organism and, optionally, wherein the sample is alive and/or mobile and, optionally, wherein the sample has at least one dimension in the range of 1 µm - 10 mm.

9. A light sheet imaging system (2) according to any preceding claim, wherein the one or more acoustic beams have an ultrasonic frequency in the range 20 kHz to 10 GHz.

10. A light sheet imaging system (2) according to any preceding claim, wherein the optical trap is configured for optically trapping an internal structure of the sample.

11. A light sheet imaging system (2) according to any preceding claim, configured to form an optical beam for optical nanosurgery and/or poration of the sample and, optionally, configured to generate a light sheet using an Airy beam or a Bessel beam.

12. A light sheet imaging method, comprising using the light sheet imaging system (2) of any preceding claim to:
form an acoustic trap using one or more acoustic beams and using the acoustic trap to acoustically trap a sample (120);
form an optical trap using one or more optical beams and using the optical trap to optically trap a part of the sample (120); and
light sheet image the sample (120).

13. A light sheet imaging method according to claim 12, comprising trapping and imaging a sample (120) over a time period of one or more hours or days and, optionally, comprising trapping and imaging a sample (120) during and/or after the delivery of a drug and/or a therapeutic agent.

14. A light sheet imaging method according to claim 12 or 13, wherein the sample (120) comprises at least one of a particle, a cell, a conglomerate of cells, a cell biopsy, a colloid, an embryo, a larva, an organism and a complex organism and, optionally, wherein the sample is alive and/or mobile and, optionally, wherein the sample (120) has at least one dimension in the range of 1µm - 10 mm and, optionally, wherein the light sheet imaging method comprises using the optical trap to optically trap an internal structure of the sample (120).

## Patentansprüche

1. Lichtschnitt-Bildgebungssystem (2), das Folgendes umfasst:
eine akustische Einfanganordnung (104) zum Bilden einer akustischen Falle zum akustischen Einfangen einer Probe (120) unter Verwendung eines oder mehrerer Schallstrahlen,
eine optische Einfanganordnung zum Bilden einer optischen Falle zum optischen Einfangen eines Teils der Probe (120) unter Verwendung eines oder mehrerer Lichtstrahlen,
ein optisches System (6) zum Lichtschnittabbilden der Probe (120) und
eine Probenkammer (SC') zum Aufnehmen eines Fluids (124a), in dem die Probe (120) enthalten oder suspendiert ist,
wobei das optische System (6) Beleuchtungsoptiken (BE, AS, CL, SM, RL, O1) zum Erzeugen eines Lichtschnitts zum Beleuchten eines Bereichs durch die Probe (120) und Detektionsoptiken (O2, ETL, TL) für Licht, das von dem beleuchteten Bereich der Probe (120) emittiert wird, umfasst,
wobei die Beleuchtungsoptiken (BE, AS, CL, SM, RL, O1) so konfiguriert sind, dass sich der Lichtschnitt entlang einer Beleuchtungsachse ausbreitet, und die Detektionsoptiken (O2, ETL, TL) dafür konfiguriert sind, emittiertes Licht abzubilden, das sich entlang einer Detektionsachse ausbreitet,
wobei die Beleuchtungsachse und die Detektionsachse zusammen eine optische Systemebene definieren,
wobei sich der eine oder die mehreren Schallstrahlen entlang einer akustischen Achse ausbreiten, die einen Winkel, ungleich null, im Verhältnis zu der optischen Systemebene bildet,
wobei sich die akustische Achse durch die Probenkammer (SC') erstreckt,
wobei die Probenkammer (SC') eine Öffnung (126) umfasst,
wobei die Beleuchtungsoptiken (BE, AS, CL, SM, RL, O1) und die Detektionsoptiken (O2, ETL, TL) auf der zu der Öffnung (126) entgegengesetzten Seite der Probenkammer (SC') angeordnet sind,
wobei die Probenkammer (SC') eine Wand (140) umfasst oder mindestens teilweise durch dieselbe definiert wird,
wobei die Wand (140) für den Lichtschnitt, der verwendet wird, um die Probe (120) zu beleuchten, und das Licht, das von der Probe (120) emittiert wird, durchlässig ist und
wobei die Wand (140) dafür konfiguriert ist, den einen oder die mehreren Schallstrahlen weiterzuleiten.

2. Lichtschnitt-Bildgebungssystem (2) nach Anspruch 1, wobei die akustische Einfanganordnung (104) zwei gegenüberliegende Schallwandler (30a, 30b) zum Erzeugen zweier sich entgegengesetzt ausbreitender Schallstrahlen umfasst, um so eine stehende Schallwelle (22) zu bilden, welche die akustische Falle definiert.

3. Lichtschnitt-Bildgebungssystem (2) nach Anspruch 1, wobei die akustische Einfanganordnung (104) einen Schallwandler zum Erzeugen eines Schallstrahls und eine Oberfläche zum Reflektieren des Schallstrahls umfasst, um so eine stehende Schallwelle zu bilden, welche die akustische Falle definiert.

4. Lichtschnitt-Bildgebungssystem (2) nach einem der vorhergehenden Ansprüche, wobei die Detektionsachse senkrecht zu der Beleuchtungsachse ist und, wahlweise, wobei die akustische Achse senkrecht zu der optischen Systemebene ist.

5. Lichtschnitt-Bildgebungssystem (2) nach Anspruch 4, wobei die Probenkammer (SC') eine Mikrofluidik-Kammer umfasst oder ist.

6. Lichtschnitt-Bildgebungssystem (2) nach Anspruch 5, wobei die Wand (140) flexibel und/oder verformbar ist und, wahlweise, wobei die Wand (140) eine Membran umfasst, die mindestens eines von Polyester, Polyethylenterephthalat (PET), biaxial orientiertem Polyethylenterephthalat (BoPET), Mylar und Fluorethylenpropylen (FEP) umfasst.

7. Lichtschnitt-Bildgebungssystem (2) nach einem der vorhergehenden Ansprüche, wobei die Probenkammer (SC') einen Fluideinlass und einen Fluidauslass definiert und, wahlweise, wobei mindestens einer von dem Fluideinlass und dem Fluidauslass in einem Weg des einen oder der mehreren Schallstrahlen oder angrenzend an denselben positioniert ist und, wahlweise, umfassend eine Fluidpumpe, eine Eingangsfluidleitung, welche die Fluidpumpe mit dem Fluideinlass verbindet, und eine Ausgangsfluidleitung, welche den Fluidauslass mit der Fluidpumpe verbindet, und, wahlweise, wobei mindestens eine von der Eingangsfluidleitung und der Ausgangsfluidleitung einen Mikrofluidik-Kanal umfasst oder zumindest teilweise durch denselben definiert wird.

8. Lichtschnitt-Bildgebungssystem (2) nach einem der vorhergehenden Ansprüche, wobei die Probe (120) mindestens eines von einem Partikel, einer Zelle, einem Konglomerat von Zellen, einer Zellbiopsie, einem Kolloid, einem Embryo, einer Larve, einem Organismus und einem komplexen Organismus umfasst und, wahlweise, wobei die Probe lebendig und/oder beweglich ist und, wahlweise, wobei die Probe mindestens eine Abmessung in dem Bereich von 1 µm bis 10 mm aufweist.

9. Lichtschnitt-Bildgebungssystem (2) nach einem der vorhergehenden Ansprüche, wobei der eine oder die mehreren Schallstrahlen eine Ultraschallfrequenz in dem Bereich von 20 kHz bis 10 GHz aufweisen.

10. Lichtschnitt-Bildgebungssystem (2) nach einem der vorhergehenden Ansprüche, wobei die optische Falle zum optischen Einfangen einer inneren Struktur der Probe konfiguriert ist.

11. Lichtschnitt-Bildgebungssystem (2) nach einem der vorhergehenden Ansprüche, die dafür konfiguriert ist, einen Lichtstrahl für optische Nanochirurgie und/oder Poration der Probe zu bilden, und, wahlweise, dafür konfiguriert ist, einen Lichtschnitt unter Verwendung eines Airy-Strahls oder eines Bessel-Strahls zu erzeugen.

12. Lichtschnitt-Bildgebungsverfahren, umfassend das Verwenden des Lichtschnitt-Bildgebungssystems (2) nach einem der vorhergehenden Ansprüche, um:
eine akustische Falle unter Verwendung eines oder mehrerer Schallstrahlen zu bilden und unter Verwendung der akustischen Falle, um eine Probe (120) akustisch einzufangen,
eine optische Falle unter Verwendung eines oder mehrerer Lichtstrahlen zu bilden und unter Verwendung der optischen Falle, um einen Teil der Probe (120) optisch einzufangen, und
die Probe (120) durch Lichtschnitt abzubilden.

13. Lichtschnitt-Bildgebungsverfahren nach Anspruch 12, umfassend das Einfangen und Abbilden einer Probe (120) über einen Zeitraum von einer/einem oder mehreren Stunden oder Tagen und, wahlweise, umfassend das Einfangen und Abbilden einer Probe (120) während und/oder nach der Verabreichung eines Arzneimittels und/oder eines therapeutischen Wirkstoffs.

14. Lichtschnitt-Bildgebungsverfahren nach Anspruch 12 oder 13, wobei die Probe (120) mindestens eines von einem Partikel, einer Zelle, einem Konglomerat von Zellen, einer Zellbiopsie, einem Kolloid, einem Embryo, einer Larve, einem Organismus und einem komplexen Organismus umfasst und, wahlweise, wobei die Probe lebendig und/oder beweglich ist und, wahlweise, wobei die Probe (120) mindestens eine Abmessung in dem Bereich von 1 µm bis 10 mm aufweist und, wahlweise, wobei das Lichtschnitt-Bildgebungsverfahren das Verwenden der optischen Falle umfasst, um eine innere Struktur der Probe (120) optisch einzufangen.

## Revendications

1. Système d'imagerie à feuille de lumière (2), comprenant :
un agencement de piégeage acoustique (104) pour former un piège acoustique pour piéger acoustiquement un échantillon (120) en utilisant un ou plusieurs faisceaux acoustiques ;
un agencement de piégeage optique pour former un piège optique pour piéger optiquement une partie de l'échantillon (120) en utilisant un ou plusieurs faisceaux optiques ;
un système optique (6) pour réaliser l'imagerie à feuille de lumière de l'échantillon (120) ; et
une chambre d'échantillon(s) (SC') pour accueillir un fluide (124a) dans lequel l'échantillon (120) est contenu ou en suspension,
dans lequel le système optique (6) comprend un dispositif optique d'éclairage (BE, AS, CL, SM, RL, O1) pour générer une feuille de lumière pour éclairer une région au travers de l'échantillon (120) et un dispositif optique de détection (O2, ETL, TL) pour imager la lumière émise depuis la région éclairée de l'échantillon (120),
dans lequel le dispositif optique d'éclairage (BE, AS, CL, SM, RL, O1) est configuré de telle sorte que la feuille de lumière se propage suivant un axe d'éclairage et le dispositif optique de détection (O2, ETL, TL) est configuré pour imager la lumière émise qui se propage suivant un axe de détection,
dans lequel l'axe d'éclairage et l'axe de détection définissent ensemble un plan de système optique,
dans lequel les un ou plusieurs faisceaux acoustiques se propagent suivant un axe acoustique qui définit un angle non à zéro par rapport au plan de système optique,
dans lequel l'axe acoustique s'étend au travers de la chambre d'échantillon(s) (SC'),
dans lequel la chambre d'échantillon(s) (SC') comprend une ouverture (126),
dans lequel le dispositif optique d'éclairage (BE, AS, CL, SM, RL, O1) et le dispositif optique de détection (O2, ETL, TL) sont localisés sur le côté opposé de la chambre d'échantillon(s) (SC') par rapport à l'ouverture (126),
dans lequel la chambre d'échantillon(s) (SC') comprend, ou est au moins partiellement définie par, une paroi (140),
dans lequel la paroi (140) est transparente vis-à-vis de la feuille de lumière utilisée pour éclairer l'échantillon (120) et vis-à-vis de la lumière émise depuis l'échantillon (120), et
dans lequel la paroi (140) est configurée pour transmettre les un ou plusieurs faisceaux acoustiques.

2. Système d'imagerie à feuille de lumière (2) selon la revendication 1, dans lequel l'agencement de piégeage acoustique (104) comprend deux transducteurs acoustiques opposés (30a, 30b) pour générer deux faisceaux acoustiques en contre-propagation de manière à former une onde acoustique stationnaire (22) qui définit le piège acoustique.

3. Système d'imagerie à feuille de lumière (2) selon la revendication 1, dans lequel l'agencement de piégeage acoustique (104) comprend un transducteur acoustique pour générer un faisceau acoustique et une surface pour réfléchir le faisceau acoustique de manière à former une onde acoustique stationnaire qui définit le piège acoustique.

4. Système d'imagerie à feuille de lumière (2) selon l'une quelconque des revendications précédentes, dans lequel l'axe de détection est orthogonal à l'axe d'éclairage et en option, dans lequel l'axe acoustique est orthogonal au plan de système optique.

5. Système d'imagerie à feuille de lumière (2) selon la revendication 4, dans lequel la chambre d'échantillon(s) (SC') comprend ou est une chambre microfluidique.

6. Système d'imagerie à feuille de lumière (2) selon la revendication 5, dans lequel la paroi (140) est souple et/ou déformable et en option, dans lequel la paroi (140) comprend une membrane comprenant au moins un matériau parmi le polyester, le téréphtalate de polyéthylène (PET) le téréphtalate de polyéthylène orienté bi-axialement (BoPET), le Mylar et l'éthylène propylène fluoré.

7. Système d'imagerie à feuille de lumière (2) selon l'une quelconque des revendications précédentes, dans lequel la chambre d'échantillon(s) (SC') définit une entrée de fluide et une sortie de fluide et en option, dans lequel au moins l'une parmi l'entrée de fluide et la sortie de fluide est positionnée dans une voie des un ou plusieurs faisceaux acoustiques ou lui est adjacente et en option, comprenant une pompe à fluide, un conduit de fluide d'entrée qui relie la pompe à fluide à l'entrée de fluide et un conduit de fluide de sortie qui relie la sortie de fluide à la pompe à fluide et en option, dans lequel au moins l'un du conduit de fluide d'entrée et du conduit de fluide de sortie comprend un canal microfluidique ou est au moins partiellement défini par celui-ci.

8. Système d'imagerie à feuille de lumière (2) selon l'une quelconque des revendications précédentes, dans lequel l'échantillon (120) comprend au moins un échantillon parmi une particule, une cellule, un conglomérat de cellules, une biopsie cellulaire, un colloïde, un élément embryonnaire, une larve, un organisme et un organisme complexe et en option, dans lequel l'échantillon est vivant et/ou mobile et en option, dans lequel l'échantillon présente au moins une dimension dans la plage de 1 µm à 10 mm.

9. Système d'imagerie à feuille de lumière (2) selon l'une quelconque des revendications précédentes, dans lequel les un ou plusieurs faisceaux acoustiques présentent une fréquence ultrasonore dans la plage de 20 kHz à 10 GHz.

10. Système d'imagerie à feuille de lumière (2) selon l'une quelconque des revendications précédentes, dans lequel le piège optique est configuré pour piéger optiquement une structure interne de l'échantillon.

11. Système d'imagerie à feuille de lumière (2) selon l'une quelconque des revendications précédentes, configuré pour former un faisceau optique pour la nanochirurgie optique et/ou la poration de l'échantillon et en option, configuré pour générer une feuille de lumière en utilisant un faisceau d'Airy ou un faisceau de Bessel.

12. Procédé d'imagerie à feuille de lumière, comprenant l'utilisation du système d'imagerie à feuille de lumière (2) selon l'une quelconque des revendications précédentes pour :
former un piège acoustique en utilisant un ou plusieurs faisceaux acoustiques et en utilisant le piège acoustique pour piéger acoustiquement un échantillon (120) ;
former un piège optique en utilisant un ou plusieurs faisceaux optiques et en utilisant le piège optique pour piéger optiquement une partie de l'échantillon (120) ; et
réaliser l'imagerie à feuille de lumière de l'échantillon (120).

13. Procédé d'imagerie à feuille de lumière selon la revendication 12, comprenant le piégeage et l'imagerie d'un échantillon (120) sur une période temporelle d'une ou de plusieurs heures ou d'un ou de plusieurs jours et en option, comprenant le piégeage et l'imagerie d'un échantillon (120) pendant et/ou après l'administration d'un médicament et/ou d'un agent thérapeutique.

14. Procédé d'imagerie à feuille de lumière selon la revendication 12 ou 13, dans lequel l'échantillon (120) comprend au moins un échantillon parmi une particule, une cellule, un conglomérat de cellules, une biopsie cellulaire, un colloïde, un élément embryonnaire, une larve, un organisme et un organisme complexe et en option, dans lequel l'échantillon est vivant et/ou mobile et en option, dans lequel l'échantillon (120) présente au moins une dimension dans la plage de 1 µm à 10 mm et en option, dans lequel le procédé d'imagerie à feuille de lumière comprend l'utilisation du piège optique pour piéger optiquement une structure interne de l'échantillon (120).
